# EUROPEAN PATENT APPLICATION

(11) **EP 4 776 570 A1**
(43) Date of publication of application: **15.07.2026**
(21) Application number: 25224189.8
(22) Date of filing: 17.12.2025
(51) Int. Cl.: H04L 9/40, G06F 21/31, G06F 21/41

(54) **CROSS-DOMAIN SECURE AUTHENTICATION ENGINE IN AN ITEM LISTING SYSTEM**

(30) Priority: 30.12.2024 US 202419004906
(71) Applicant: eBay Inc., San Jose, CA 95125 (US)
(72) Inventor: GEMICI, Caglayan Cem, SAN JOSE, 95125 (US)
(74) Representative: Müller-Boré & Partner Patentanwälte PartG mbB

(57) **Abstract**

Methods, systems, and computer storage media for providing a cross-domain secure authentication engine in an item listing system are described. The cross-domain secure authentication engine is an advanced, modular system designed to handle user authentication seamlessly across different service domains, while ensuring security features and an adaptive user experience. In an item listing system, the cross-domain secure authentication engine operates based on a security-focused framework that streamlines user authentication across multiple domains without sacrificing user experience. It integrates a modal containing an iframe-based sign-in interface associated with a separate authentication domain and employs a postMessage API for cross-origin communication. Key features include dynamic modal resizing-adjusting the sign-in window to different authentication steps (like email, password, or OTP)-and parameterized iframes that remove unnecessary UI elements for a cleaner user experience. The cross-domain secure authentication engine also supports security measures and supports incremental, multi-step authentication flows to reduce user friction.

## Description

### BACKGROUND

Users can authenticate into different computing environments using various authentication solutions. In item listing systems, authentication solutions ensure secure access, smooth user experiences, and seamless integration across various service domains, such as browsing items, managing user profiles, and completing purchases. For example, OAuth 2.0 allows users to authenticate via third-party services reducing friction by enabling single sign-on (SSO) and improving user convenience. This approach streamlines login processes, allowing users to quickly access their accounts without needing to remember additional credentials. Another common solution is JWT (JSON Web Tokens), which provides a secure, stateless method for maintaining user sessions. After logging in, the user receives authentication cookies that is used for authentication in subsequent interactions with the system.

### SUMMARY

Various aspects of the technology described herein are generally directed to systems, methods, and computer storage media for, among other things, providing a cross-domain secure authentication engine in an item listing system. The cross-domain secure authentication engine is an advanced, modular system designed to handle user authentication seamlessly across different service domains, while ensuring security features and an adaptive user experience. The engine leverages modern web technologies to provide a secure, dynamic, and flexible authentication flow that can be integrated into various applications, especially those involving cross-origin interactions, such as e-commerce.

In an item listing system, the cross-domain secure authentication engine operates based on a security-focused framework that streamlines user authentication across multiple domains without sacrificing user experience. It integrates a lightbox modal containing an iframe-based sign-in interface associated with a separate authentication domain, and employs a postMessage API for secure, cross-origin communication. Key features include dynamic modal resizing-adjusting the sign-in window to different authentication steps (like email, password, or OTP)-and parameterized iframes that remove unnecessary UI elements for a cleaner user experience. The cross-domain secure authentication engine also supports strong security measures (CAPTCHA, CSP, rate limiting, and XSS protection) and supports incremental, multi-step authentication flows to reduce user friction. Cross-domain secure authentication engine can adapt to various application needs, scales seamlessly across different service domains (such as checkout and authentication pages), and ensures that users can authenticate quickly and securely without being redirected away from their primary task.

By way of example, a user visits cart.example.com associated with a cart page (i.e., parent page) and clicks the "Checkout" button. Instead of encountering a full-page sign-in process, a modal window appears in the center of the screen with a darkened background, displaying the sign-in form from signin.example.com via an iframe on the parent page. The user enters their email the sign-in form, and if CAPTCHA is triggered, it is shown within the iframe. Security features, such as rate limiting, ensure secure interactions throughout the process. When additional fields like the password or one-time PIN need to be displayed, the sign-in page sends a "resize" event to the parent cart page, causing the modal to expand. Once the user successfully signs in, the iframe sends a message back to the parent page to indicate that authentication is complete. This allows navigation to the checkout page to continue with the checkout process without requiring a reload or redirect to authenticate the user. Finally, the modal closes, and the user can complete their purchase. It is contemplated that if the user is already on a checkout page (i.e., checkout page is parent page), the cross-domain secure authentication engine can authenticate the user to complete their purchase without ever leaving the checkout page.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A - 1C are schematics associated with providing cross-domain secure authentication, in accordance with aspects of the technology described herein;
FIG. 2A is a block diagram of an item listing system for providing cross-domain secure authentication, in accordance with aspects of the technology described herein;
FIG. 2B is a flow diagram associated with providing cross-domain secure authentication, in accordance with aspects of the technology described herein;
FIG. 3 provides a first exemplary method of providing cross-domain secure authentication in an item listing system, in accordance with aspects of the technology described herein;
FIG. 4 provides a second exemplary method of providing cross-domain secure authentication in an item listing system, in accordance with aspects of the technology described herein;
FIG. 5 provides a third exemplary method of providing cross-domain secure authentication in an item listing system, in accordance with aspects of the technology described herein
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION OF THE INVENTION

### OVERVIEW

An item listing system and platform support storing items (products or assets) in item databases and providing a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California. An item listing system may also provide an authentication solution to ensure secure and personalized user interactions, enhance the user experience, and support essential features such as order processing and account management.

Authentication frameworks for online systems provide secure way to protect user data and ensure that only authorized individuals can access certain features. Authentication allows users to create personalized experiences, manage their accounts, and safeguard sensitive information such as payment methods and personal details. Authentication is particularly important in item listing systems that handle transactions, where security and privacy are paramount.

In item listing systems, authentication enables securing access to the cart and the purchasing process. When users log in, they can add items to their cart, save their selections for later, and proceed to checkout without the need to re-enter information each time. The authentication process ensures that only the rightful account holder can access their cart, preventing unauthorized changes to the items or misuse of payment information. Additionally, it enables a seamless and personalized experience, allowing users to track their order history, manage shipping details, and update payment methods as needed. By providing a secure and efficient way for users to access and manage their cart, authentication enhances the overall shopping experience while maintaining the integrity of the transaction process.

Conventional item listing systems lack the computing infrastructure and algorithms necessary for seamless user-friendly purchasing experiences due to a cumbersome full-page sign-in process that often leads to cognitive overload and increased drop-off rates. Typically, this sign-in experience is encountered by users when they attempt to make a purchase, creating a significant barrier that discourages transaction completion. As a result, users face a disjointed purchasing journey that detracts from their overall engagement. This full-page sign-in process lacks contextual integration, forcing users to divert their attention away from their intended actions. Furthermore, it does not function as a standalone, modular component, making integration into various purchasing workflows cumbersome, especially for teams operating on different technology stacks. Existing item listing systems also present challenges in maintaining consistent security features, which can hinder user trust. Moreover, the conventional sign-in experience often disrupts the user's flow by taking them out of the context they are currently in. This interruption forces users to navigate away from their intended actions, which can be frustrating and lead to a decrease in overall customer satisfaction. As a result, this disruption can also negatively impact the checkout completion rate, as users may abandon their purchase process due to the additional steps or the perceived inconvenience of logging in. Such friction points in the user experience can reduce conversion rates and hinder seamless engagement with the platform.

By way of example, consider a user, Alex, who is browsing an online store and finds a pair of shoes he'd like to buy. He adds them to his cart and proceeds to the checkout page. Just before finalizing the purchase, instead of presenting a small, integrated sign-in prompt, the site redirects Alex to an entirely separate full-page login screen. This sudden switch jars him-he can no longer see his cart or the item details, and he's pulled out of his purchasing mindset.

He now must recall his login credentials on a new page that feels disconnected from his previous shopping experience. The unfamiliar layout and absence of the product context cause him to hesitate. Frustrated, Alex spends extra time resetting his password and navigating back to the cart. By the time he returns to the checkout flow, he's grown uncertain, loses momentum, and decides to postpone the purchase. This entire ordeal, triggered by the full-page sign-in process, leads to a loss of potential revenue for the store and a negative experience for Alex. Alex's checkout experience lacks a seamless user-friendly interface due to the cumbersome full-page sign-in process that detracts from his overall engagement because the checkout experience is not integrated with in a way that maintains his attention with his intended actions. As such, a more comprehensive item listing system - with an alternative basis for authentication functionality - can improve computing operations and interfaces authentication in an item listing system.

### DESCRIPTION OF TECHNICAL SOLUTION

At a high level, a cross-domain secure authentication engine is an advanced, modular system designed to handle user authentication seamlessly across different service domains, while ensuring robust security features and a smooth, adaptive user experience. The cross-domain secure authentication engine leverages modern web technologies to provide a secure, dynamic, and flexible authentication flow that can be integrated into various applications, especially those involving cross-origin interactions, such as e-commerce or SaaS platforms

Cross-domain secure authentication engine is built on a modular architecture that enables easy integration into any web application. It utilizes a modal (e.g., a lightbox UI) with an embedded iframe to load the sign-in interface from a separate authentication domain. A key innovation is its use of the postMessage API for cross-origin secure communication between the parent page and iframe while preventing security risks such as XSS. Operationally, the sign-in page sets authentication cookies within the browser, which can be accessed by any other page on the example.com domain, including the cart, checkout, and other pages. In one embodiment, no authentication artifact, such as a token or cookie, is passed through postMessage to the parent. In this way, the complete message, transmitted between the iframe, and the parent does not include any tokens or cookies. The checkout page, for example, relies on cookies to determine whether the user is authenticated and has an active session. Since the cookies are set within the iframe by signin.example.com, they are shared across any *.example.com domain. As a result, when the user navigates to checkout.example.com, the page first checks for the presence of an active session via the authentication cookies. If the session is active, the member-specific checkout page is displayed. The cross-domain secure authentication engine also features dynamic modal resizing, adjusting the modal size during different authentication steps, such as email input and password entry, using custom resize events to ensure a fluid user experience.

In a typical item listing system, user authentication often involves either a full-page redirection to a login portal or a separate in-frame integration that offers little interactivity or adaptability. The technical solution breaks away from these conventional, rigid methods and delivers a seamless, context-sensitive authentication layer. Instead of pushing users off their intended checkout path, it embeds a sign-in experience directly into the flow, displayed as a dynamically adjustable modal overlay. In this way, the cross-domain secure authentication engine provides dynamic integration without full-page redirects and leverages an existing authentication infrastructure securely.

Traditionally, item listing systems rely on standalone sign-in pages hosted on the authentication service's domain. This forces users to leave the checkout journey and, upon returning, often results in lost context and increased abandonment. The new method introduces a lightbox modal inside the checkout domain itself, allowing users to authenticate without ever losing sight of their cart or progress. The dynamic resizing of the modal-triggered by messages from the child iframe-is not a common practice in standard authentication flows. It allows the modal to adapt to changing authentication steps (e.g., from an email input to password or OTP entry) without reloading or resizing the entire page.

While item listing systems have sophisticated authentication backends-complete with CAPTCHAs, rate limiting, and strict Content Security Policies-these are typically confined to full-page login experiences. Cross-domain secure authentication engine leverages the existing infrastructure but packages it into a modular, embedded iframe. The result is a best-of-both-worlds scenario: the flexibility and continuity of an integrated, in-context login step combined with the reliability and security of a dedicated authentication service. This architectural choice is not just a technical convenience; it is a conceptual shift toward embedding trusted authentication resources more naturally into the user's purchasing flow. In essence, this innovation reimagines how and where authentication can occur. It respects the boundaries and strengths of existing security frameworks while providing a fluid, user-centered experience-something that has not been widely realized in traditional item listing system authentication models.

By way of illustration, users often abandon their intended purchases when confronted with a full-page sign-in screen that disrupts their shopping flow and causes cognitive overload. To address this, authentication has to be streamlined with a context-sensitive mini sign-in solution that can appear directly within the purchase process. The cross-domain secure authentication engine is provided to integrate easily into different pages-such as view item, cart, and checkout-regardless of the underlying technology stacks or domain (e.g., cart.example.com, checkout.example.com). Cross-domain secure authentication engine incorporates security features of a full-page sign-in, including CAPTCHA, bot signature detection, rate limiting, XSS mitigation, and CSP (Context Security Policy) enforcement, ensuring that the process remains both user-friendly and robust. Moreover, the cross-domain secure authentication engine component is simple to adopt, expandable to new domains, and does not depend on a consumer's specific codebase for authentication tasks.

To achieve this, a cross-domain secure authentication engine is provided. Cross-domain secure authentication can be provided via web development programming (e.g., plain or vanilla JavaScript). The cross-domain secure authentication engine accepts a data structure-driven format (e.g., a JSON-based configuration) from the integrating application and uses JavaScript events to relay information back to the host page. By creating a modal or modal interface (e.g., a lightbox UI-the background dimming and the modal window appearing in the foreground) the sign-in experience becomes visually distinct yet contextually integrated.

Inside the modal, an iframe hosts the sign-in interface. The sign-in interface can be parameterized to remove headers or footers to maintain a minimal, distraction-free environment while preserving critical security measures. The cross-domain secure authentication engine also relies on two-way message passing via the postMessage API, allowing communication between the parent page (for example, the cart page) and the embedded sign-in page, even though they are associated with different domains. The consumer (such as the checkout application) does not have to handle the underlying complexity of cross-origin messaging; they can simply subscribe to high-level events like "authentication complete."

The cross-domain secure authentication engine specifically handles dynamic resizing of the modal. Normally, iframes cannot directly change their own dimensions from within due to cross-domain restrictions. However, as the user progresses from one authentication step to another-e.g., from entering an email address to providing a password or one-time PIN-the embedded sign-in page needs more or less space. The iframe therefore sends custom "resize" events via postMessage, prompting the parent page to adjust the modal's size seamlessly. This ensures a fluid, adaptive interface, reflecting the user's immediate needs without jolting them out of the checkout flow. In this way, the cross-domain secure authentication engine removes user fatigue, preserves secure authentication practices, and adapts to a range of domains and technology stacks. By unifying flexibility and a streamlined user experience, it significantly reduces friction in the buying process.

Operationally, messaging payloads-structured objects like {source: 'id-signin-to-parent', action: 'signInLoad', version: '1.0.0', timestamp: ... }- and message types (signinLoad, error, success, close, resize) act as unique fingerprints for implementing cross-domain secure authentication. Similarly, cross-domain secure authentication can be provided based on distinctive animation parameters for modal transitions (e.g., min-height 0.5s cubic-bezier(0.785, 0.135, 0.15, 0.86), max-width 0.5s cubic-bezier(0.785, 0.135, 0.15, 0.86)).

Consider a scenario in which a parent web page hosts a sign-in modal loaded via an embedded iframe from a separate domain. When the iframe is fully initialized and ready to interact, it sends a structured data object-something like {source: 'id-signin-to-parent', action: 'signInLoad', version: '1.0.0', timestamp: 1697040532 }-back to the parent page using the postMessage API. Each element of this payload is chosen to uniquely identify the type of message and the stage of the authentication flow. For instance, source distinguishes that this message originates specifically from the sign-in component, action indicates the event type (in this case signInLoad shows that the iframe has completed loading its initial state), version helps maintain backward compatibility and track updates over time, and timestamp provides a precise moment of occurrence. Together, these attributes act like a "fingerprint" to ensure that only recognized, authentic messages are processed by the parent page, thereby enhancing security and trust.

In a similar vein, unique styling properties can serve as another form of fingerprinting. Consider the transitions used for resizing or animating the modal window, such as min-height 0.5s cubic-bezier(0.785, 0.135, 0.15, 0.86), max-width 0.5s cubic-bezier (0.785, 0.135, 0.15, 0.86). These specific cubic-bezier curves and transition durations create a distinctive "animation signature." If another, unrelated implementation was to use the exact same messaging patterns combined with these particular timing curves and easing functions for modal transitions, it would strongly suggest that they were copying from the original solution. Thus, both the structured message payloads and the unique animation parameters contribute to a recognizable "fingerprint" that can help identify and ensure the authenticity of the cross-domain secure authentication system's implementation.

By way of example, imagine a user, Jane, browsing through an online marketplace and adding a pair of branded headphones to her cart. When she proceeds to the checkout page, rather than being redirected to a separate sign-in page, a small overlay dims the background right where she is, and a compact modal appears. Inside this modal, a simple email field from a separate sign-in domain is displayed. After Jane types in her email and clicks "Next," the modal communicates with the parent page behind the scenes, automatically expanding to present the password field without needing to reload or change tabs. Jane enters her password, and the modal smoothly adjusts one final time to include a one-time PIN input box. Once that's done and her credentials are verified, the modal closes effortlessly, returning Jane to her checkout flow. Instead of dealing with a cluttered, full-page sign-in process, she experiences a seamless, secure, and context-aware authentication step that doesn't disrupt her purchase.

### EXAMPLE SYSTEMS AND RESOURCES

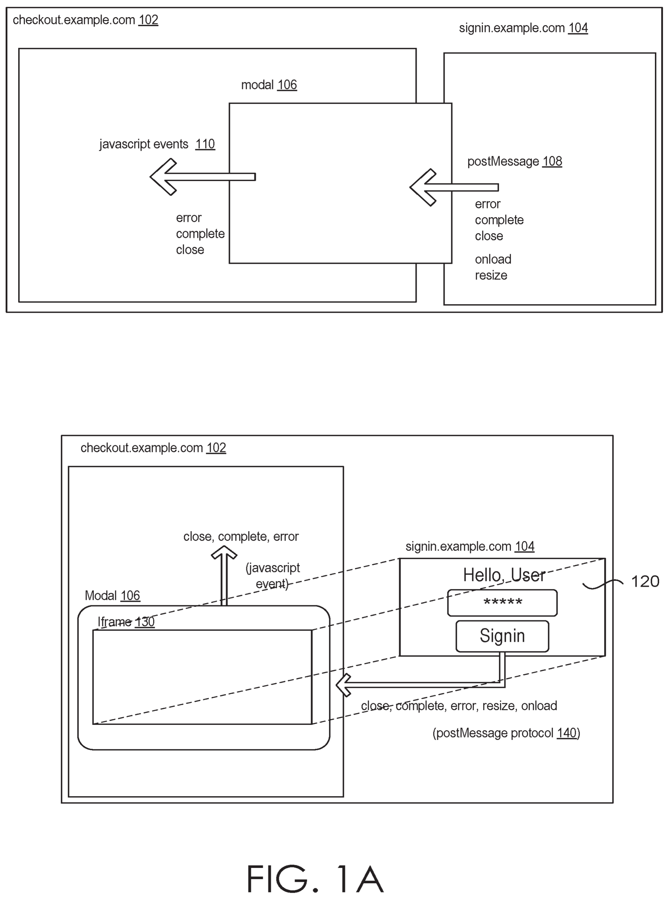

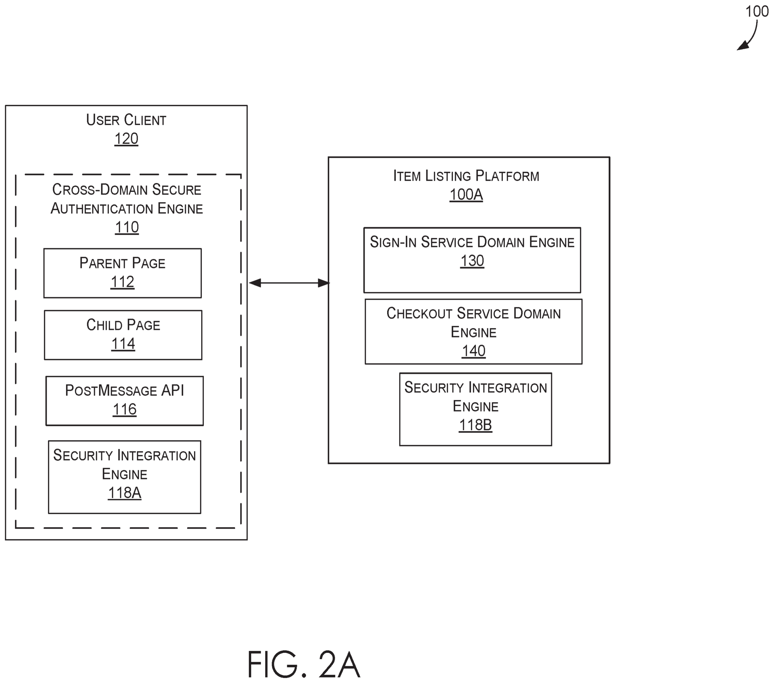

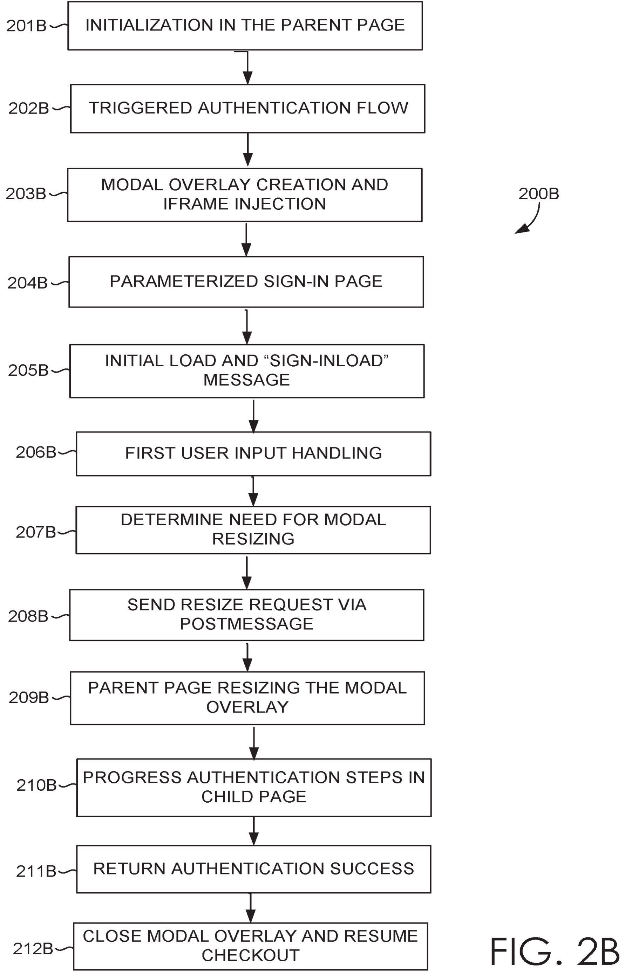

Aspects of the technical solution can be described by way of examples and with reference to FIGS. 1A - 1C, 2A and 2B. With reference to FIG. 1A is a schematic that illustrates a secure, cross-domain sign-in integration that seamlessly embeds an authentication workflow into an e-commerce checkout page. By combining a modal overlay on cart.example.com with an iframe loading a sign-in form from signin.example.com, and leveraging a message protocol for event-driven communication, they illustrate how users can complete necessary authentication steps without leaving the checkout flow.

FIG. 1A includes checkout.example.com 102, signin.example.com 104, modal 106, postMessage 108, event 110A, sign-in form 120, iframe 130, and postMessage protocol 140-that support the cross-domain secure authentication engine designed to enhance user experience, maintain contextual integrity, and ensure security.

When a user navigates to checkout.example.com 102 and initiates a purchase, instead of being redirected to a separate full-page login screen, the cross-domain secure authentication engine displays a modal 106 directly on the same page. This modal is not a simple static overlay; rather, it employs an iframe 130 to load a sign-in form 120 from signin.example.com 104. The use of a separate authentication domain ensures that all security and compliance measures-ranging from CAPTCHA checks to strict Content Security Policies-are maintained independently and at scale.

To enable this seamless interaction, the modal 106 and its embedded iframe 130 rely on a secure communication channel. Direct function calls between the parent checkout page and the iframe 130 are restricted by browser security policies, so instead the cross-domain secure authentication engine implements the postMessage 108 method. This capability of the postMessage 108 and JavaScript events 110, allows messages to be passed safely between the two different domains. Instructions to resize the modal, update interface elements, or signal successful authentication are sent using the postMessage protocol 140, ensuring both sides of the interaction remain in sync. For example, when the user first enters their email on the sign-in form, the iframe 130 sends a "resize" instruction via postMessage 108 to the parent page, prompting it to adjust the modal's dimensions and reveal the password field or a one-time PIN prompt without the need for a page reload.

As such, the integration of a modal overlay on checkout.example.com 102, loading a sign-in form 120 from signin.example.com 104 within an iframe 130, and coordinating interactions through the postMessage protocol 140 and JavaScript events 110, represents a refined approach to authentication. It maintains the user's original context, reduces friction, and leverages an existing trusted authentication infrastructure-while still ensuring that both parties communicate securely and fluidly using postMessage 108.

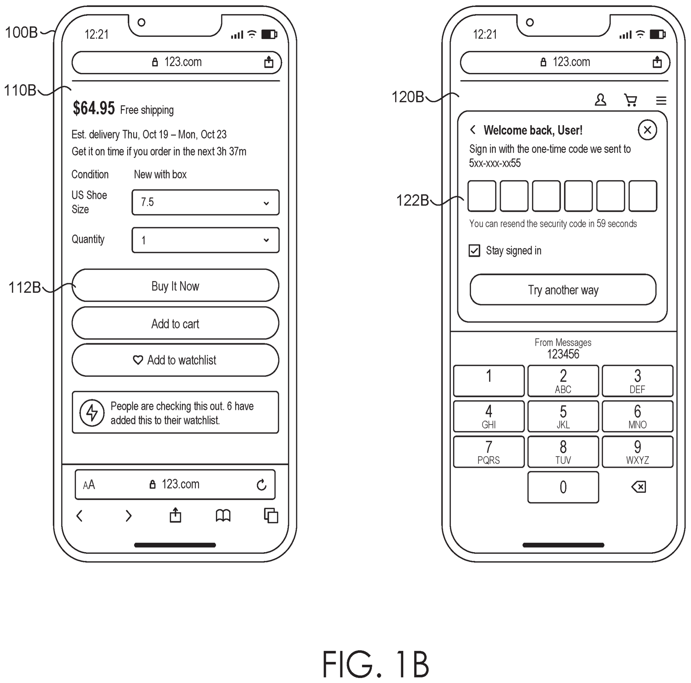

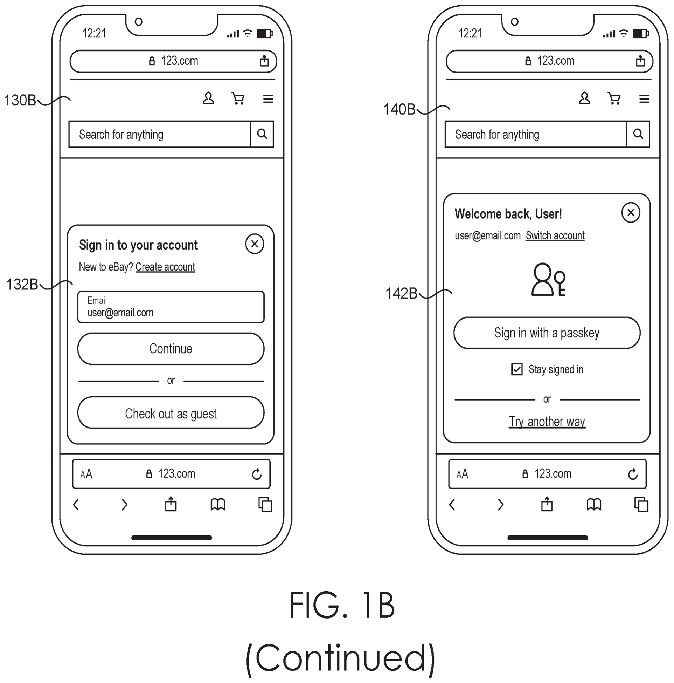

With reference to FIG. 1B, FIG. 1B illustrates dynamic lightbox authentication for seamless mobile user experiences based on a cross-domain secure authentication engine. The cross-domain secure authentication engine leverages dynamic lightbox authentication to provide a secure and adaptable user experience on mobile devices. By integrating authentication directly within the shopping flow-whether through one-time codes, email-based login, or passkeys-the lightbox (e.g., lightbox GUI 122B, lightbox GUI 132B, lightbox GUI 142B) maintains user context and eliminates disruptive navigation to separate login pages. The cross-domain secure authentication engine flexibility ensures compatibility with various authentication methods, delivering a frictionless and secure experience that enhances engagement and aligns with modern security standards.

The cross-domain secure authentication engine is designed to provide a seamless and adaptive authentication experience that maintains user context within a mobile device environment. On mobile device 100B associated with the 123.com domain, the cross-domain secure authentication engine leverages graphical user interfaces (GUIs) and a dynamically adjustable lightbox to authenticate users without disrupting their workflow.

When the user interacts with GUI 110B, which displays essential shopping options such as "Item," "Price," "Buy It Now," and "Add to Cart," they may select the "Buy It Now" option 112B to proceed with a purchase. At this stage, authentication may be required to ensure security and confirm the user's identity. Rather than redirecting the user to a separate login page, a Lightbox GUI 122B is presented as a modal overlay. This overlay maintains the user's context and greets them with a personalized message, such as *"Welcome back, User! Sign in with the one-time code we sent to* 555-555-5555." The lightbox minimizes distractions, ensuring the user remains focused on completing their purchase.

Alternatively, depending on the authentication method supported or preferred by the user, the lightbox can dynamically adjust to present a different flow. For instance, GUI 130B displays a Lightbox GUI 132, which introduces an email-based sign-in process. Here, the user is prompted to enter their email address into the modal overlay. The flexibility of the lightbox design allows it to accommodate this method without leaving the original context of the transaction.

In cases where advanced security measures or user convenience is prioritized, the lightbox may adapt to offer passkey authentication. GUI 140B showcases this scenario through Lightbox GUI 104B, where the modal overlay prompts the user with *"Welcome back, User! Sign in with passkey. "* This method provides a frictionless and secure experience, leveraging modern authentication mechanisms.

The ability of the lightbox to adjust dynamically to different authentication methods-such as one-time codes, email-based sign-in, or passkeys-while preserving the user's context as important aspect of the cross-domain secure authentication engine. It eliminates the need for page reloads or navigational disruptions, ensuring that the user remains engaged in their purchasing journey. Additionally, the modular nature of the lightbox allows it to seamlessly integrate with various authentication infrastructures, making it adaptable to current and future security technologies.

It is contemplated that that a lightbox GUI dynamically adjusts its size based on resize events triggered by the authentication process. For instance, when transitioning from an initial email input to displaying additional fields for a password or one-time code, the lightbox adapts seamlessly without disrupting the user experience. This dynamic resizing ensures that the interface remains clear and user-friendly, accommodating the needs of multi-step authentication processes. Once the authentication is successfully completed, the lightbox closes automatically, and the user is navigated directly to the checkout page, maintaining a smooth and uninterrupted transaction flow.

By maintaining a consistent, user-focused interface across different authentication flows, the lightbox solution enhances usability, supports diverse authentication methods, and ensures a secure, context-aware shopping experience on mobile devices. This flexibility not only improves user retention but also aligns with evolving authentication standards, providing a future-ready solution.

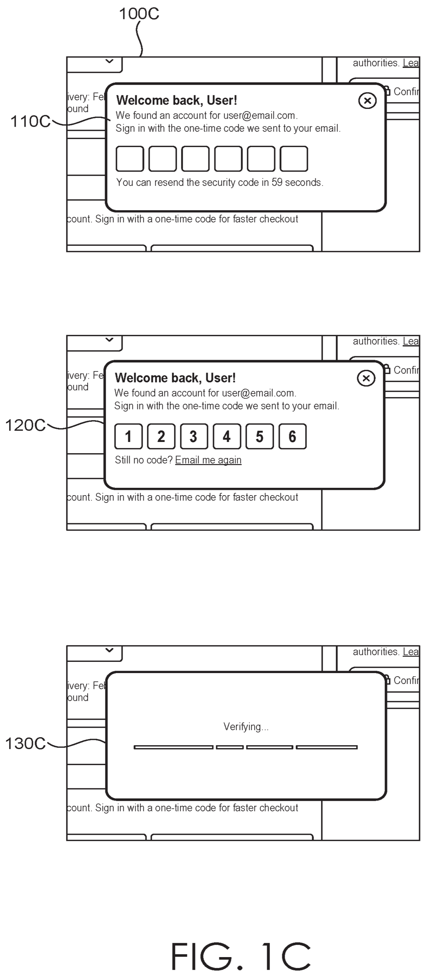

With reference to FIG. 1C, FIG. 1C illustrates cross-domain secure authentication with dynamic lightbox integration where parent page 100C incorporates a lightbox graphical user interface - GUI (e.g., lightbox GUI 110A, lightbox GUI 110B, and lightbox GUII 110C) for user authentication without requiring navigation away from the current page. By leveraging a sign-in service domain, the cross-domain secure authentication engine dynamically handles user input, verifies credentials, and authenticates access to the requested resource. This integration maintains context, enhances user experience, and utilizes robust security features provided by the existing authentication infrastructure.

The parent page 100C provides a seamless user experience by incorporating a lightbox GUI 110C, which presents a modal overlay interface. When a user interacts with the page, such as initiating a secure action or accessing a restricted resource, the lightbox appears without redirecting the user away from the parent page. The lightbox GUI 110C displays a personalized message such as: *"Welcome back, User! We found an account for user@email.com. Sign in with the one-time code we sent to your email. "* This contextual approach reduces friction by recognizing the user and offering a familiar, streamlined authentication method.

Once the user enters the one-time code into the lightbox GUI 120C, the modal updates dynamically to reflect the ongoing process. Messages like *"Verifying...* " keep the user informed while the input is validated on lightbox GUI 130C. This interaction is handled via a sign-in form associated with the existing authentication infrastructure of a sign-in service domain.

Using the authentication infrastructure of the sign-in service domain offers several significant advantages. Security is enhanced by centralizing advanced features such as CAPTCHA, rate limiting, and Content Security Policy (CSP) enforcement, ensuring these measures are applied consistently. Seamless integration is achieved as the parent page utilizes the robust capabilities of the sign-in service domain, avoiding the need to duplicate complex authentication logic. This approach also improves user retention by keeping the user within the lightbox overlay, preserving their context and reducing the likelihood of drop-offs.

Additionally, efficiency is maximized, as authentication is handled by the specialized infrastructure of the sign-in domain. Through this implementation, the user is securely authenticated to the requested page without leaving the parent page 100C, delivering a fluid and secure experience that leverages the strengths of the existing sign-in infrastructure.

With reference to FIG. 2A, FIG. 2A illustrates item listing system 100 including item listing platform 100A, cross-domain secure authentication engine 110, parent page 112, child iframe 114, postMessage API 116, security integration engine 118A and security integration engine 118B, user client 120, sign-in service domain engine 130 and checkout service domain engine 140.

Within the item listing system 100, a user interacts through a user client 120-typically a browser or a dedicated app-accessing items and considering potential purchases on the item listing platform 100A. As the user engages with the interface, at some point they may proceed to the checkout process. Traditionally, this would prompt a redirect to a full-page sign-in, potentially interrupting the buying experience. Instead, the integration of a cross-domain secure authentication engine 110 transforms this interaction into a fluid, embedded process.

When the user initiates the checkout from their client device (the user client 120), the parent page 112, hosted on the checkout domain, displays a modal overlay that contains an inline frame hosting a child iframe 114. This child iframe 114 originates from a dedicated sign-in service domain and loads a minimal authentication UI. The separation ensures that the sign-in logic, including credential handling and second-factor verifications, remains isolated and tightly controlled.

Because the parent page 112 and the child iframe 114 often reside on different domains, the browser's same-origin policy prevents direct DOM-level scripting between them. To facilitate secure, event-driven communication, the postMessage API 116 is employed. The child iframe 114 can send structured messages-such as requests to resize its modal container or signals that authentication has succeeded-to the parent page. The parent page 112, in turn, adjusts the modal layout or proceeds with the checkout flow as instructed. The interplay of these messaging events keeps the user journey intact from the perspective of the user client 120, eliminating the need to switch contexts or navigate away from the ongoing transaction.

Oversight of security measures and compliance is managed by the security integration engine 118A and security integration engine 118B, which enforces robust protections like CAPTCHAs, CSP directives, rate limiting, and other safeguards to maintain the integrity of the authentication process. The security integration engine 118A (client-side) and security integration engine 118B (server-side) are components that work together to provide a secure and seamless authentication process for users, particularly for scenarios such as authenticating a user for access to a checkout page in the item listing platform 100A. These engines are designed to ensure that the user's credentials are validated, their identity is authenticated, and the integrity of the authentication process is maintained across different domains and sessions.

The client-side security integration engine 118A is responsible for handling the initial user interactions and processing of authentication-related information on the user's device (such as a browser or mobile app). Security integration engine 118A manages tasks that require direct user input and securely communicates with the server-side system. Key responsibilities include user authentication initiation, session management, secure communication, local validation and interaction with the server.

The server-side security integration engine 118B is responsible for handling the backend authentication logic, validating the authenticity of requests, and ensuring that sensitive user data is protected throughout the authentication process. Key responsibilities include authentication verification, token and session management, authorization control, cross-domain authentication, and logging and monitoring.

Meanwhile, the sign-in service domain engine 130 handles all aspects of verifying user identities, issuing cookies and maintaining session states. This separation of concerns ensures that the checkout domain's codebase remains lightweight and focused on its core functionality. The sign-in service also ensures that the latest security standards are applied, including encryption and token validation protocols, without requiring frequent updates to the checkout system. By centralizing authentication and session management, the sign-in service reduces the risk of security vulnerabilities in the checkout domain. Additionally, this approach allows for more flexible and scalable user authentication, as updates to security protocols can be made independently of the checkout system's code.

Session management can be implemented as a small library integrated into each page, which performs session checks before the page loads. The code checks for authentication cookies, such as JWTs or security tokens, to verify if the user is logged in. If a valid session exists, the page continues to load; otherwise, the user is redirected to a sign-in page.

There are two main approaches to session management. The first approach uses a centralized session management platform, which handles authentication and session validation across various pages, ensuring a consistent and secure user experience. The second approach involves embedding session management directly within each page's code, such as on the cart or checkout page. In this case, the page code checks for a valid session and triggers actions, like displaying a login modal or initiating checkout, if no session is found.

In some cases, the parent page may include session validation to determine if the user requires sign-in before loading any other content, centralizing the session checks at a higher level to maintain uniformity across multiple pages.

On the checkout side, the checkout service domain engine 140 continues to manage the cart, pricing, shipping details, and other transaction-related elements. By cleanly separating these responsibilities, each domain can be optimized and updated independently. The synergy of these components-the user client (120), parent page (112), child iframe (114), postMessage API (116), security integration engine (118), sign-in service domain engine (130), and checkout service domain engine (140)-enables a streamlined, contextually integrated sign-in experience. It ensures that users stay engaged, secure, and informed throughout their transaction, enjoying a cohesive and uninterrupted journey facilitated by the cross-domain secure authentication engine 110.

As such, cross-domain secure authentication engine is a bundled client-side and server-side solution that operates with a checkout domain's web page. In the checkout service domain 140 (e.g., checkout. example. com), the parent page includes this authentication engine, typically implemented as a JavaScript library. When triggered by a user action, such as attempting to proceed to checkout, the engine dynamically creates a modal overlay and loads a sign-in form within an iframe. This cross-domain secure authentication engine 110 code, served either from the checkout domain's own servers or a trusted CDN, is seamlessly integrated into the frontend logic of the page.

The sign-in form and the backend authentication infrastructure reside in the sign-in service domain 130 (e.g., signin. example. com). This dedicated authentication domain handles sensitive operations such as validating credentials, enforcing CAPTCHA challenges, rate limiting, and issuing secure tokens. By sourcing the iframe from this domain, the solution ensures that all authentication-related tasks occur within a tightly controlled and security-focused environment, leveraging the domain's specialized infrastructure and expertise.

Communication between the checkout and sign-in domains is facilitated entirely on the client side through cross-origin secure communication using the postMessage API. This API enables structured and secure messaging between the parent page and the iframe, eliminating the need for complex server-side integration. Properly configured event listeners in the JavaScript running on both the parent page and the iframe handle these messages, ensuring smooth and responsive interactions.

The core functionality of the engine is built around this client-side messaging channel, which acts as a secure bridge between the checkout and authentication domains. While the engine itself resides alongside the checkout page, the actual authentication interface and logic remain isolated within the authentication domain. This architecture not only maintains a high level of security but also ensures a seamless user experience, allowing the checkout domain to focus on its primary tasks while delegating all authentication responsibilities to the specialized sign-in service domain.

For clarity and efficient reference, a glossary of key terms and concepts pertinent to the technical solution is provided below.

Parent Page (Checkout Service Domain): In a cross-domain authentication setup, the "parent page" is the main webpage where the user initiates an action (e.g., accessing a checkout process). This page usually runs on one domain (e.g., cart.example.com) and embeds an external authentication form via an iframe. Parent Page is responsible for hosting the modal overlay, listening for events from the child iframe, and adjusting the checkout related user interface in response.

Child Iframe (Sign-In Service Domain): The child iframe is a contained, sandboxed environment running on a different domain (e.g., signin.example.com). It presents the actual sign-in form and handles multi-step authentication logic. The iframe cannot directly manipulate the parent page's layout due to browser security constraints and must use a messaging protocol to request changes like resizing.

Modal Overlay Window: A modal overlay is a user interface element that appears on top of the current page content, typically dimming or blurring the background. In this technical solution, it hosts the iframe-based sign-in form. It can be dynamically resized and updated based on authentication steps, providing a focused and interruptive-but contextually relevant-experience for users.

Lightbox User Interface: A lightbox interface darkens or blurs the page beneath it to draw attention to the content in the foreground (in this case, the sign-in modal). This technique keeps the user focused on the current task (sign-in) without navigating them away from the main page's context (e.g., the checkout flow).

Cross-Origin Secure Communication: This refers to sending data securely between pages hosted on different domains. Standard web security policies prevent direct DOM manipulation or variable sharing across domains. Instead, controlled communication mechanisms like the postMessage API must be used. In this solution, cross-origin secure communication ensures that authentication data, event signals, and layout adjustment requests flow safely between the parent and the iframe.

postMessage API: The postMessage API is a browser-provided method for sending messages between windows or iframes, even if they are on different domains. It allows the child iframe to send structured "resize" or "auth success" events to the parent page without violating same-origin policies. The parent can also respond or initiate communication, enabling a secure two-way interaction channel.

Parameterized Iframe: A parameterized iframe is an embedded frame whose URL or initial load state can include special parameters or flags. These parameters might remove non-essential interface elements (like headers, footers, or navigation), creating a minimal, distraction-free sign-in experience. Parameterization ensures the iframe's content can be tailored to the modal's constraints without code duplication or separate builds.

Minimal UI / Minimal Modal Experience: The minimal user interface focuses on providing only the essential inputs and indicators needed for the current step in the authentication process. By stripping away extra elements and branding, the user is less distracted, and the modal can remain small and focused, improving conversion rates and reducing cognitive load.

Multi-Step Authentication Flow: Instead of asking for all credentials at once, authentication often involves multiple steps-such as entering an email, then a password, and possibly a one-time PIN or security question. Each step can require different space in the UI. The solution's dynamic resizing capability ensures that the modal adapts to the changing layout requirements of these successive authentication steps without forcing full page reloads.

Dynamic Modal Resizing: This concept refers to the ability of the modal overlay to adjust its dimensions on the fly. For example, when only an email field is displayed, the modal can remain small. Once the user proceeds to password entry or OTP verification, the iframe sends a "resize" message, prompting the parent page to enlarge the modal so the new input fields fit comfortably. This keeps the user experience smooth and prevents unnecessary scrolling or cramped layouts.

Security Features (CAPTCHA, CSP, Rate Limiting, XSS Protection): These are standard security and anti-abuse measures integrated into the authentication process:
CAPTCHA: Ensures that requests are coming from humans rather than bots.
Content Security Policy (CSP): Limits what scripts and resources can load, reducing the risk of cross-site scripting attacks.
Rate Limiting: Restricts the number of authentication attempts over a given period to prevent brute force attacks.
XSS Protection: Safeguards against cross-site scripting attacks by sanitizing input and controlling content injection.

### Authentication Tokens / User Status:

These are pieces of data that represent a user's authenticated state (e.g., a session token or JWT). JWTs (JSON Web Tokens), cookies, and tokens are used to manage user authentication and maintain secure sessions. JWTs are compact, URL-safe tokens used for authentication, containing encoded data that is digitally signed to verify its authenticity. Cookies store authentication data, such as JWTs or other session tokens, on the client's browser. These cookies ensure that the user remains authenticated across different pages or sessions. A token, as a broader term, refers to any piece of data (including JWTs, OAuth tokens, or session tokens) used to authenticate or authorize a user. Collectively, these elements are referred to as "authentication credentials" or "security tokens," ensuring that users are securely authenticated and authorized across the system.

Abandoned Cart Reminder Request / Quick Account Actions / In-Product Promotions: These are examples of contexts in which a user might be prompted with the modal overlay sign-in. Instead of forcing a full-page reload to log in, the system can show the modal immediately at the point of need (e.g., when the user tries to check out after receiving a reminder email about an abandoned cart).

Stand-Alone Plug and Play Component: The sign-in modal solution is built to be easily integrated into different workflows and pages with minimal development effort. It does not require tight coupling with the parent page's codebase, enabling teams with varying technology stacks to adopt it without extensive rewrites.

Full-page Sign-in vs. Overlay Sign-in: The traditional approach might redirect users to a separate full-page sign-in screen, causing context loss and potential user drop-off. The overlay sign-in, by contrast, keeps the user on the same page and shows a smaller, integrated sign-in box, reducing friction and improving conversion.

By understanding these key terms and concepts, developers and stakeholders can appreciate how the described technical solution enhances user experience, security, and integration flexibility within cross-domain authentication workflows.

With reference to FIG. 2B, FIG. 2B, illustrates a schematic 200B associated with providing a cross-domain secure authentication engine in accordance with embodiments described herein. The technical solution of the cross-domain secure authentication engine can be explained by way of steps.

201B: Initialization in the Parent Page (Cart Domain) - Initially, the parent page-such as one hosted on cart.example.com-is loaded by the user client, embedding a small JavaScript library for cross-domain authentication and providing a minimal placeholder for a future modal overlay.

202B: Triggered Authentication Flow - When the user tries to complete a purchase or another protected action, the parent page recognizes that authentication is needed. Rather than redirecting to a separate login screen, the parent triggers a sequence that will dynamically produce a modal overlay.

203B: Modal Overlay Creation and Iframe Injection - A modal overlay element is then created on the parent page. It dims the background content and provides a clean foreground area. Into this overlay, an inline frame (iframe) is injected, its source pointing to the sign-in interface available at the dedicated sign-in domain.

204B: Parameterized Sign-In Page (Child Page) -The iframe's URL is parameterized so that only essential authentication elements are displayed. Headers, footers, and extraneous UI components are omitted, ensuring a focused sign-in experience without unnecessary clutter.

205B: Initial Load and "signinLoad" Message - Once the sign-in page within the iframe loads its initial step (for instance, a single email input field), it sends a "signinLoad" message back to the parent page using the postMessage API. The parent page, upon receiving this message, confirms the interface is ready and prepares for user input.

206B: First User Input Handling - The user enters their email address into the sign-in field embedded in the iframe. The input is validated via client-side and service-side security integration engine operations, which determines the next stage-perhaps the introduction of a password prompt or a one-time PIN field.

207B: Determining Need for Modal Resizing - If the next stage demands additional screen space, the iframe calculates the modal's new required dimensions. The sign-in page cannot resize the parent's modal directly, so it must rely on cross-domain messaging.

208B: Sending Resize Request via postMessage - Through the postMessage API, the iframe sends a "resize" request to the parent, specifying the exact width and height needed for the next step. This is a structured message that the parent is configured to recognize and trust.

209B: Parent Page Resizing the Modal Overlay - Upon receiving the resize message, the parent page dynamically adjusts the modal overlay's CSS properties, smoothly increasing its dimensions so the user can comfortably view the additional authentication elements. The adjustment occurs without page reloads, preserving the user's context.

210B: Progressing Authentication Steps in the Child Page - With the modal now resized, the next set of authentication inputs-password fields or an OTP entry-can be rendered by the iframe. The sign-in logic, enforced by the dedicated sign-in service domain, handles CAPTCHAs, CSP rules, and rate-limiting measures as the user continues to provide credentials.

211B: Reporting Authentication Success - Once the user's authentication is confirmed, the iframe sends a "success" message via postMessage. The parent page recognizes this signal as the conclusion of the sign-in process.

212B: Closing the Modal and Resuming Checkout - After receiving the success message, the parent removes the modal overlay and the iframe from the DOM, returning the user's focus to the original checkout context. Armed with valid authentication credentials, the parent page can now proceed with the protected checkout actions-finalizing the purchase and submitting the order details.

It is contemplated that in cases where errors occur (e.g., an invalid password), the iframe can send an "error" message, prompting the parent page to display an error state within the modal or handle the situation gracefully. If the user closes the modal prematurely, the "close" message leads the parent to restore the previous state without completing authentication. This arrangement supports extensibility: new authentication factors, updated UI flows, or integration with additional domains can be introduced by adjusting parameters, message types, or supported UI elements. Future enhancements merely require updates within the sign-in domain or the configuration logic, without reworking the entire architecture.

In this manner, steps 201B through 212B outline a technical solution that maintains a seamless, context-aware authentication flow. The parent page, user client, iframe, and cross-domain messaging work in concert, ensuring a fluid user experience while preserving security, compliance, and modular extensibility.

By way of illustration, when a user accesses a parent page-such as a cart or checkout page hosted on a first domain (e.g., cart. example. com)-and initiates an action requiring authentication (e.g., accessing a checkout process or responding to an abandoned cart reminder), a modal overlay window is generated dynamically. This modal overlay is a lightbox user interface that dims or blurs the background, preserving the user's context while introducing the sign-in form.

The sign-in form is hosted in an inline frame (iframe) sourced from a sign-in service domain (e.g., signin. example. com). This iframe is parameterized to remove unessential elements like headers and footers, presenting a minimal interface tailored to the modal environment. The cross-domain secure authentication engine ensures communication between the parent and child pages via the postMessage API, a secure messaging protocol that allows structured interactions across domains while adhering to strict security policies.

Initially, the sign-in form displays a single input field (e.g., email). When the user enters their email (the first user input) and submits it, the child iframe determines that the next authentication step requires more screen space-such as for a password or one-time PIN (OTP). Since the iframe cannot resize its container directly due to security restrictions, it sends a resize event using the postMessage API. This event communicates the new dimensions required for the modal overlay to the parent page.

Upon receiving the resize event, the parent page adjusts the modal's dimensions dynamically. This process is part of a dynamic modal resizing mechanism that supports multi-step authentication. As the updated modal overlay appears, the user sees the additional input fields rendered by the updated sign-in form in the iframe.

The user then provides their second user input (e.g., a password or OTP) via the updated sign-in form. This input is validated by the sign-in service domain, which applies authentication security mechanisms, including CAPTCHA, CSP enforcement, and rate limiting. Once the second input is verified, the iframe securely transmits an authentication success event back to the parent page via the postMessage API.

The multi-step authentication process, supported by modular architecture and cross-origin secure communication, enables seamless login interactions. These interactions, triggered by actions like cart access or account updates, maintain the user's flow and context, delivering an optimized, secure authentication experience embedded within the e-commerce workflow.

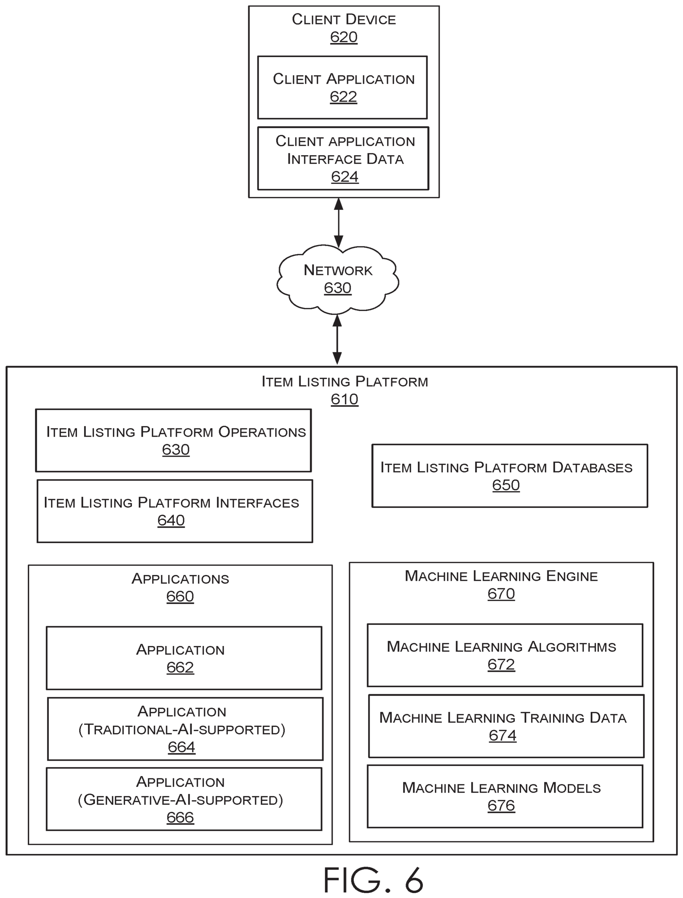

Aspects of the technical solution can be described by way of examples and with reference to FIGS. 1A - 1C, 2A, and 2B. FIG. 2A is a block diagram of an exemplary technical solution environment, based on example environments described with reference to FIGS. 6A, 6B, 7 and 8 for use in implementing embodiments of the technical solution are shown. Generally, the technical solution environment includes a technical solution system suitable for providing the example item listing system 100 in which methods of the present disclosure may be employed. In particular, FIG 2A shows a high-level architecture of the item listing system 100 in accordance with implementations of the present disclosure. Among other engines, managers, generators, selectors, or components not shown (collectively referred to herein as "components"), the item list platform system 100 of FIG. 2A support functionality described in FIGS. 1A- 1G.

### EXAMPLE METHODS

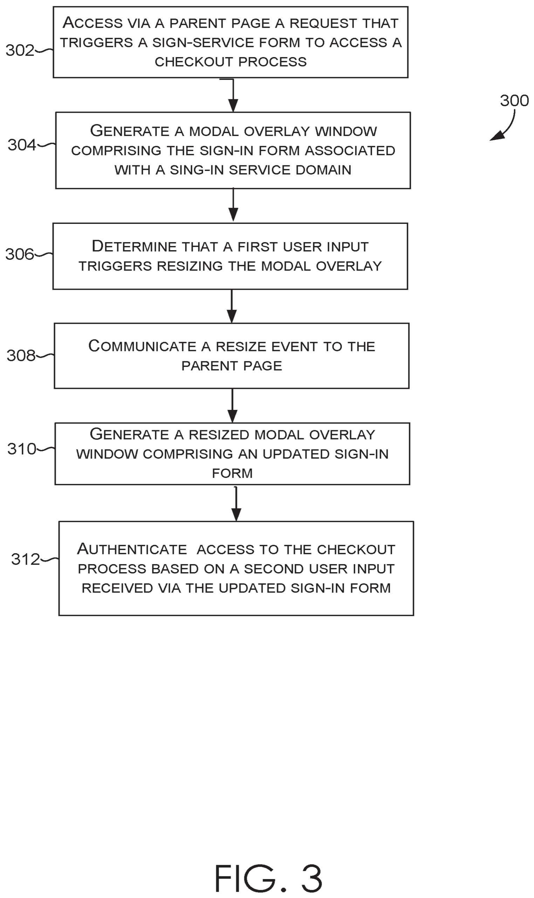

With reference to FIGS. 3, 4, and 5 flow diagrams that illustrate methods for providing a cross-domain secure authentication engine in an item listing system. The methods may be performed using the item listing system described herein. In embodiments, one or more computer-storage media having computer-executable or computer-useable instructions embodied thereon that, when executed, by one or more processors can cause the one or more processors to perform the methods (e.g., computer implemented method) in an item listing system (e.g., computerized system or computer system).

Turning to FIG. 3, a flow diagram is provided that illustrates a method 300 for providing a cross-domain secure authentication engine in an item listing system. At block 302, the cross-domain secure authentication engine accesses via a parent page a request that triggers a sign-in service form to access a checkout process. At block 304, the cross-domain secure authentication engine generates a modal overlay window comprising the sign-in form associated with a sign-in service domain. At block 306, the cross-domain secure authentication engine determines that a first user input triggers resizing the modal overlay. At block 308, the cross-domain secure authentication engine communicates a resize event to the parent page. At block 310, the cross-domain secure authentication engine generates a resized modal overlay window comprising an updated sign-in form. At block 312, the cross-domain secure authentication engine authenticates access to the checkout process based on a second user input receive via the updated sign-in form.

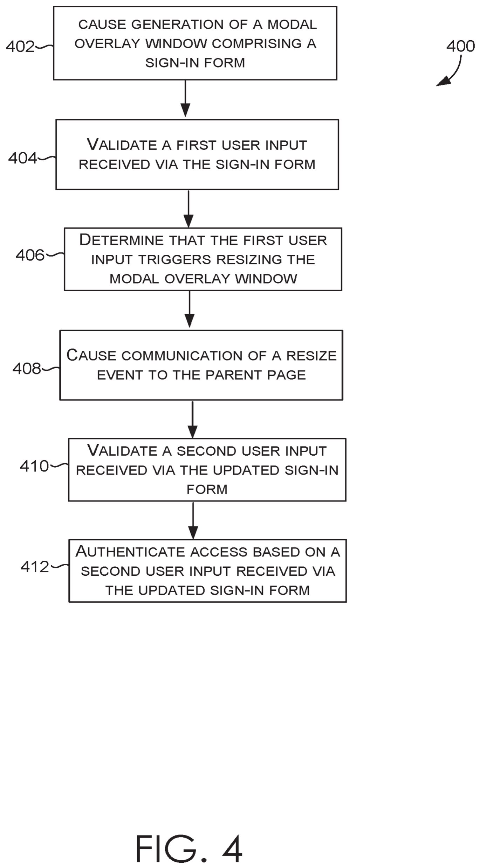

Turning to FIG. 4, a flow diagram is provided that illustrates a method 400 for providing a cross-domain secure authentication engine in an item listing system. At block 402, sign-in service domain causes generation of a modal overlay window comprising a sign-in form. At block 404, the sign-in service domain validates a first user input received via the sign-in form. At block 406, the sign-in service domain determines that the first user input triggers resizing the modal overlay window. At block 408, the sign-in service domain causes communication of a resize event to the parent page. At block 410, the sign-in service domain validates a second user input received via the updated sign-in form. At block 412, the sign-in domain authenticates access based on a second user input received via the updated sign-in form.

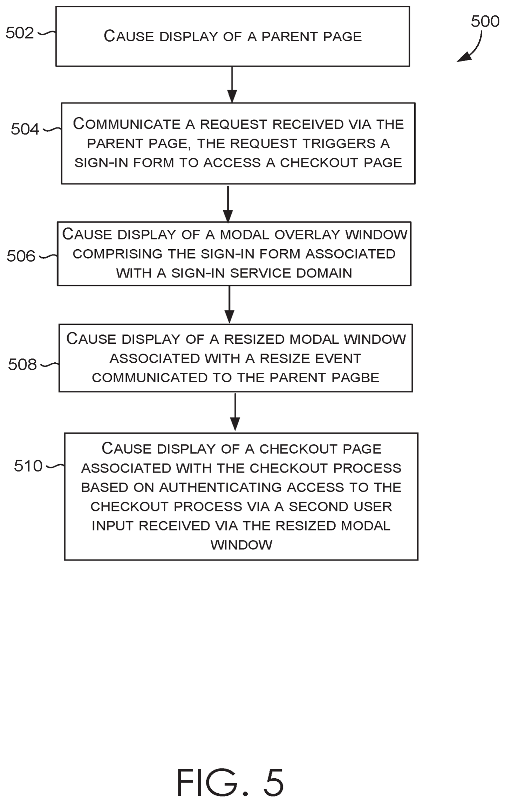

Turning to FIG. 5, a flow diagram is provided that illustrates a method 500 for providing a cross-domain secure authentication engine in an item listing system. At block 502, a user client causes display of a parent page. At block 504, the user client communicates a request received via the parent page. The request triggers a sign-in form to access a checkout page. At block 506, the user client causes display of a modal overlay window comprising the sign-in form associated with a sign-in service domain. At block 508, the user client causes display of a resized modal window associated with a resize event communicated to the parent page. At block 510, the user client causes display of a checkout page associated with checkout process based on authenticating access to the checkout process via a second user input received via the resized modal window.

### TECHNICAL IMPROVEMENT

Embodiments of the present invention have been described with reference to several inventive features (e.g., operations, systems, engines, and components) associated with an item listing system. Inventive features described include operations, interfaces, data structures, and arrangements of computing resources associated with providing the functionality described herein relative with reference to a cross-domain secure authentication engine associated with an item listing system.

Embodiments of the present invention relate to the field of computing, and more particularly to an item listing system. The following described exemplary embodiments provide a system, method, and program product to, among other things, execute generative cross-domain secure authentication operations that provide improved seamless authentication. Therefore, the present embodiments improve the technical field of authentication and item listing platform technology by providing by introducing a scalable, efficient, and nuanced approach to modeling user preferences and generating personalized recommendations.

For example, by isolating the authentication process within a dedicated sign-in service domain, it ensures that sensitive operations, such as credential validation, CAPTCHA enforcement, rate limiting, and token issuance, occur in a highly controlled and secure environment. This separation reduces the risk of vulnerabilities arising from mishandled authentication logic in the checkout domain while leveraging the expertise of a specialized infrastructure.

The use of a cross-domain secure authentication engine integrated into the checkout domain's frontend provides flexibility and seamless user interaction. The modal overlay allows users to complete the sign-in process without leaving the checkout page, maintaining their context and reducing the likelihood of abandonment. Dynamically loading the sign-in form in an iframe sourced from the authentication domain ensures that authentication workflows can be updated or enhanced without requiring changes to the checkout domain's core code.

Secure cross-origin communication via the postMessage API eliminates the need for complex server-side integration between domains. This approach simplifies the architecture while adhering to strict security policies, as all sensitive data is exchanged through controlled and validated messaging channels. Properly configured event listeners on both the parent page and the iframe ensure robust communication and responsiveness, enabling features such as dynamic resizing of the modal overlay and real-time updates during multi-step authentication processes. In this way, the technical solution offers several notable advantages that enhance both functionality and security.

Functionality of the embodiments of the present invention have further been described, by way of an implementation and anecdotal examples - to demonstrate that the operations for providing authentication using a cross-domain secure authentication engine in an item listing system as a solution to a specific problem in artificial intelligence technology to improve computing operations in item listing systems. Overall, these improvements result in less CPU computation, smaller memory requirements, and increased flexibility in item listing system when compared to previous conventional item listing system operations performed for similar functionality.

### ADDITIONAL SUPPORT FOR DETAILED DESCRIPTION OF THE INVENTION

### EXAMPLE ITEM LISTING SYSTEM ENVIRONMENT

Referring now to FIG. 6, FIG. 6 illustrates an example item listing system 600 computing environment in which implementations of the present disclosure may be employed. In particular, FIG. 6 shows a high-level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 630) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the item listing system's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 120 supports the process of building, training, and fine-tuning machine learning models. Machine learning training data 120 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

Item listing system 600 provides item listing system data that informs customer service interactions, and as such, can operate with a customer service management system (e.g., customer service management system 100 in FIG. 1) to address any issues or questions that arise from those item listings. A customer service management system can be software solution designed to streamline and automate the handling of customer inquiries and support requests across various communication channels. The customer service management system centralizes customer interactions, allowing service teams to efficiently categorize, prioritize, and resolve issues, while tracking and managing each case through its lifecycle. With integrated tools such as ticketing systems, knowledge bases, and automation features like AI-driven chatbots, it enhances response times, reduces manual effort, and ensures consistent, high-quality customer service. The item listing system and customer service management system can be integrated to ensure seamless communication and efficient resolution of customer concerns.

### Example Distributed Computing System Environment

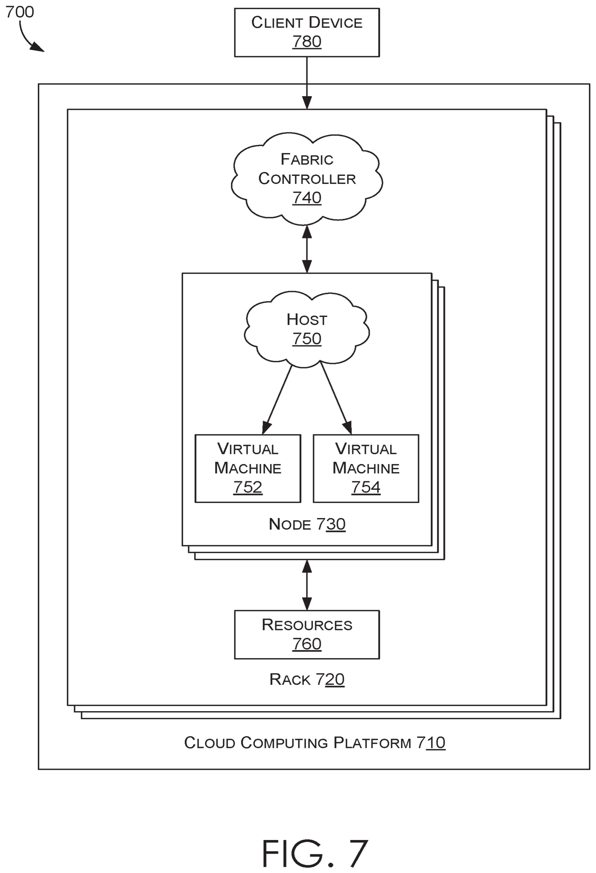

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### EXAMPLE COMPUTING ENVIRONMENT

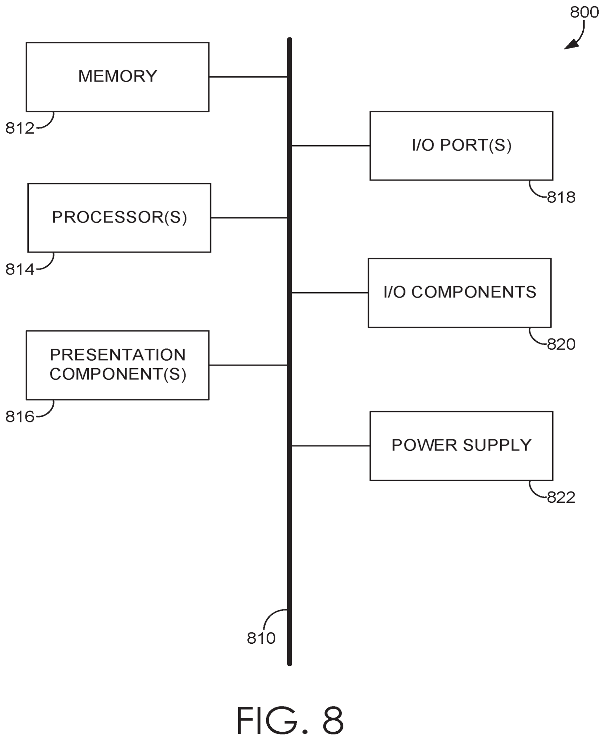

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
accessing, via a parent page, a request that triggers a sign-in form to access a checkout process, the parent page is associated with a first domain;
based on the request, generating a modal overlay window comprising the sign-in form associated with a sign-in service domain that is different from the first domain;
determining that a first user input triggers resizing the modal overlay, wherein the first user input is received via the sign-in form;
based on determining that the first input triggers resizing the modal overlay window, communicating a resize event to the parent page, wherein the resize event is a cross-origin secure communication associated with the sign-in service domain and the first domain;
based on communicating the resizing event to the parent page, generating a resized modal overlay window, the resized modal overlay window comprising an updated sign-in form associated with the sign-in service domain; and
authenticating access to the checkout process based on a second user input received via the updated sign-in form.

2. The system of claim 1, wherein the request corresponds to a seamless login interaction selected from one of the following: cart access request, quick account actions request, in-product promotions request, and abandoned cart reminder request;
and/or
wherein the parent page is a cart page associated with a cart service domain or a checkout page associated with checkout service domain.

3. The system of claim 1 or 2, wherein the modal overlay window supports a modular architecture with embedded inline frame to load the sign-in form from the sign-in service domain operating as an existing authentication infrastructure that supports a full-page sign-in process associated with the sign-in service domain;
and/or
wherein the modal overlay window is an inline frame, the inline frame is parameterized to enable selectively removing unessential elements and wherein the modal overlay window is a lightbox user interface that causes dimming or blurring of background content.

4. The system of any one of claims 1 to 3, wherein generating the modal overlay windows is associated with resizing the modal overlay window based on an initial resize event that is communicated to the parent page for an initial display of the modal overlay window.

5. The system of any one of claims 1 to 4, wherein cross-origin secure communications enable communications between parent pages and child inline frames, the cross-origin secure communications enable using an existing infrastructure of the sign-in service domain via the first domain.

6. The system of any one of claims 1 to 5, wherein the resizing event supports dynamic modal resizing that allows adjusting the modal overlay window based on a current step of an authentication process associated the sign-in service domain;
and/or
wherein the resizing event is associated with a postMessage Application Programming Interface (API) to adhere to security policies associated with resizing inline frames, the postMessage API supports custom resize events from the modal overlay window to the parent page.

7. The system of any one of claims 1 to 6, wherein the modal overlay window supports multi-step authentication while dynamically adjusting the modal overlay window, wherein the multi-step authentication is associated with one or more authentication security mechanisms.

8. One or more computer-storage media having computer-executable instructions embodied thereon that, when executed by a computing system having a processor and memory, cause the processor to perform operations, the operations comprising:
using a sign-in service domain, causing generation of a modal overlay window comprising a sign-in form associated with a sign-in service domain that authenticates access to a service;
validating a first user input received via the sign-in form;
determining that the first user input triggers resizing the modal overlay, wherein first user input is received via the sign-in form;
based on determining that the first input triggers resizing the modal overlay window, causing communication of a resize event to the parent page;
validating a second user input received via an updated sign-in form associated with the resize event; and
authenticating access to the service based on a second user input received via the updated sign-in form.

9. The media of claim 8, wherein generation of the modal overlay window is based on a request associated with the parent page, wherein the modal overlay window is an inline frame, the inline frame is parameterized to enable selectively removing unessential elements.

10. The media of claim 8 or 9, wherein cross-origin secure communications enable communications between parent pages and child inline frames, the cross-origin secure communications enable using an existing infrastructure of the sign-in service domain via the first domain.

11. The media of any one of claims 8 to 10, wherein the resizing event supports dynamic modal resizing that allows adjusting the modal overlay window based on a current step of an authentication process;
and/or
wherein the modal overlay window supports multi-step authentication while dynamically adjusting the modal overlay window, wherein the multi-step authentication is associated with one or more authentication security mechanisms.

12. A computer-implemented method, the method comprising:
accessing, via a parent page, a request that triggers a sign-in form, the parent page is associated with a with a first domain;
based on the request, generating a modal overlay window comprising the sign-in form associated with a sign-in service domain that is different from the first domain;
determining that a first user input triggers resizing the modal overlay, wherein first user input is received via the sign-in form;
based on determining that the first input triggers resizing the modal overlay window, communicating a resize event to the parent page, wherein the resize event is a cross-origin secure communication associated with the sign-in service domain and the first domain;
based on communicating the resizing event to the parent page, generating a resized modal overlay window, the resized modal overlay window comprising an updated sign-in form associated with the sign-in service domain; and
authenticating the user based on a second user input received via the updated sign-in form.

13. The computer-implemented method of claim 12, wherein cross-origin secure communications enable communications between parent pages and child inline frames, the cross-origin secure communications enable using an existing infrastructure of the sign-in service domain via the first domain.

14. The computer-implemented method of claim 12 or 13, wherein the resizing event supports dynamic modal resizing that allows adjusting the modal overlay window based on a current step of an authentication process;
and/or
wherein the resizing event is associated with a postMessage Application Programming Interface (API) to circumvent security policies associated with resizing inline frames, the postMessage API supports custom resize events from the modal overlay window to the parent page.

15. The computer-implemented method of any one of claims 12 to 14, wherein the modal overlay window supports multi-step authentication while dynamically adjusting the modal overlay window, wherein the multi-step authentication is associated with one or more authentication security mechanisms.
